# EUROPÄISCHE PATENTSCHRIFT

(11) **EP 1 591 700 B1**
(45) Veröffentlichungstag und Bekanntmachung des Hinweises auf die Patenterteilung: **09.07.2008**
(21) Anmeldenummer: 05007353.5
(22) Anmeldetag: 05.04.2005
(51) Int. Cl.: F16J 15/34, F16J 15/447

(54) **Gleitringdichtung und Verfahren zur Montage einer Gleitringdichtung**
Mechanical seal and method of assembling a mechanical seal
Garniture mécanique d'étanchéité et méthode d'assemblage d'une telle garniture

(30) Priorität: 30.04.2004 DE 102004021502
(43) Veröffentlichungstag der Anmeldung: 02.11.2005
(73) Patentinhaber: Pfeiffer Vacuum GmbH, 35614 Asslar (DE)
(72) Erfinder: Rippl, Christopher Mark, 35578 Wetzlar (DE); Sachs, Ronald, Dr., 44135 Dortmund (DE); Wagner, Jürgen, 57629 Müschenbach (DE)

(56) Entgegenhaltungen:
- AT-B- 308 485
- DE-A1- 1 950 634
- DE-C- 187 926
- GB-A- 1 003 913
- US-A- 845 701
- US-B1- 6 325 381

## Beschreibung

Die Erfindung betrifft eine Gleitringdichtung nach dem Oberbegriff des ersten Anspruchs und ein Verfahren zur Montage nach dem Oberbegriff des Anspruch 10.

In vielen Fällen müssen Gleitringdichtungen zur Abdichtung von rotierenden Wellen verwendet werden, beispielsweise wenn hohe Druckdifferenzen über der Dichtung abfallen, kleinen Leckraten gewünscht, hohe Umgebungstemperaturen gegeben und hohe Umfangsgeschwindigkeiten gefordert sind. Der Grundaufbau solcher Dichtungen besteht im Stand der Technik aus zwei ringartigen Teilen, von denen eines auf der rotierenden Welle und eines auf dem stehenden Gehäuseteil angebracht wird. Möglichst glatte Stirnflächen der ringartigen Teile sitzen dabei eng gegeneinander, zwischen ihnen bildet sich der sogenannte Dichtspalt aus. Ein möglichst enger Dichtspalt erbringt die beste Dichtwirkung, in der Praxis beträgt die Spaltweite wenige Mikrometer. Prinzipiell unterscheidet man zwischen radialen und axialen Dichtungen, je nach Orientierung des Dichtspalts. Dabei liegt der Dichtspalt bei axialen Dichtungen in radialer Richtung und umgekehrt. Für die Dichtwirkung kommt es mehr auf die Spaltweite als auf die Spaltlänge an. Die Spaltweite ist bei axialen Dichtungen besser kontrollierbar, insbesondere können engere Spalte als bei Radialdichtungen erreicht werden. Daher werden mehrheitlich axiale Gleitringdichtungen eingesetzt (Müller, Nau: Handbuch Dichtungstechnik, z.B. www.fachwissen-dichtungstechnik.de).
Damit die Dichtwirkung gewährleistet werden kann, muss eine axiale Kraft den stationären und den rotierenden Gleitring aufeinanderpressen. Dies kann über Federn realisiert werden, ein solches Beispiel lehrt DE-PS 37 40 694. Um eine gute Halterung der Gleitringe wellen- und gehäuseseitig zu erreichen und gleichzeitig eine hohe Dichtheit zu erzielen, sind weitere Bauelemente nötig. Dies können aufwändig geformte Elastomerbauteile sein, siehe DE-PS 41 15 115, deren spezielle Ausformung auch die Belastungen durch das geförderte Medium bzw. Druckdifferenzen auffangen soll.

Die Wahl der Werkstoffe für die Gleitringe spielt eine wichtige Rolle. Hierbei sind zunächst tribologische Gesichtspunkte zu beachten. Darüber hinaus spielen Temperaturbeständigkeit und Oberflächenbeschaffenheit eine Rolle. DE-OS 100 56 102 zeigt eine Anpassung der Gleitringe durch Verwendung geeigneter Materialien (im gegebenen Fall Siliziumkarbid und Kohlenstoff-Siliziumkarbid-Komposit) an spezielle Gegebenheiten.

Weitere Gleitringdichtungen sind im Stand der Technik bekannt. So schlägt die AT 308 485 B vor, eine geschlossene Gleitringdichtung um eine Welle durch Umspritzen, Umgießen, Umsintern oder Aufwalzen zu erzeugen und zwischen Welle und Gleitringdichtung ein Trennmittel vorzusehen. Die DE 19 50 634 A1 schlägt eine Labyrinthdichtung vor, welche aus auf Welle und im Gehäuse angeordneten Ringen mit L-förmigen Querschnitt aufgebaut ist. Eine Gleitringdichtungsanordnung mit einer Entlastungskammer ist Gegenstand der DE 187 926 C. Um eine Überentlastung und den Zutritt des Druckmittels zur Entlastungskammer zu vermeiden, ist ein Ventil zwischen dieser und dem Freien oder einem Raum von niedererem Druck vorgesehen. Die Gleitringdichtung ist aus L-formigen Ringen aufgebaut und wird nicht eingehender betrachtet. Die US 845 701 A, die als nächstliegender Stand der Technik angesehen wird, stellt eine Gleitringdichtung mit einer Struktur vor, welche das zum Betrieb der Dichtung notwendige Fluid aus der Dichtung in Richtung seiner Quelle und gegen das Druckgefälle fördern will. In der GB-A-1 003 913 wird eine Gleitringdichtung vorgeschlagen, die mit dem ebenfalls gelehrten Montageverfahren schnell zusammen und wieder auseinandergebaut werden kann. Ziel ist es, den Service von schlecht zugänglichen Dichtungsbaugruppen zu erleichtern. Eine zweiteilige Gleitringdichtung ist in der US-B1-6 325 381 so aufgebaut, dass ein innerer Dichtring in Kontakt mit der Welle gebracht wird und in einer Nut eines äußeren Dichtringes läuft. Beide Ringe sind an einer Stelle geteilt und werden durch einen Elastomerring zusammengezogen, so dass die Teilung geschlossen wird.

Die im Stand der Technik gelehrten Gleitringdichtungen weisen eine große Zahl von einzelnen Bauteilen auf, die miteinander kombiniert werden müssen, um die Dichtung zu fertigen. Damit wird viel Bauvolumen benötigt, das Gesamtverhältnis aus Dichtfläche und benötigtem Volumen fällt ungünstig aus. Dieses Volumen erschwert den Einsatz in Geräten, wo es oftmals auf ein kompaktes Maß bei maximaler Dichtwirkung ankommt. Die hohe Zahl der Teile macht zudem Herstellung und Montage zeitaufwändig und teuer.
Aufgrund der prinzipbedingten Reibung zwischen den Gleitringen und der geringen Kühlung tritt eine hohe Wärmeentwicklung auf. Diese Wärme muss kontrolliert abgeführt werden, wobei die Materialwahl nach JP-OS 1120486 eine Lösung bietet.
Will man die vorgenannten Dichtungen in Strömungs- oder Verdrängungsmaschinen einsetzen, in denen sich reaktive Gase befinden, stellt sich das Problem, dass viele Bestandteile dieser Dichtungen nur eine geringe Beständigkeit gegen die reaktive Gaslasten aufweisen und eine Anpassung schwierig ist.
Im Stand der Technik ist es bekannt, Gleitringe durch Sägen in drei und mehr Ringsegmente zu zerlegen und anschließend ausreichend viele Ringsegmente wieder zusammen zu fügen, beispielsweise durch Umlegen eines Federspannringes oder durch Einbringen in eine Metallfassung. Das Sägen erzeugt einen Abtrag, der es nicht mehr ermöglicht, die Ringsegmente eines Rohlings zu einem Vollkreis zusammen zu setzen. Deshalb werden Ringsegmente von mehreren Rohlingen verwendet oder es findet alternativ eine Nachbearbeitung der zusammengesetzten Ringsegmente statt. Beide Varianten erhöhen die Herstellungskosten.

Der Erfindung liegt daher die Aufgabe zugrunde, eine möglichst kompakte Gleitringdichtung mit möglichst guter Dichtwirkung zu bauen. Ihr Aufbau soll zudem so einfach wie möglich sein, die Herstellungskosten sollen reduziert werden. Weiterhin liegt der Erfindung die Aufgabe zugrunde, diese Gleitringdichtung mit einem möglichst einfachen Verfahren zu montieren.

Gelöst wird diese Aufgabe durch einen Gleitring gemäß dem kennzeichnenden Teil des ersten Anspruchs.

Die erfindungsgemäße Ausgestaltung der Gleitringdichtung erlaubt eine sehr hohe Dichtheit unter geringst möglichem Einsatz von Bauteilen und Volumen. Der Aufbau ist gegenüber dem Stand der Technik deutlich vereinfacht, wodurch Kosten in erheblichem Maße eingespart werden. Die Materialwahl erlaubt die Verwendung auch in Geräten mit schädlichem Umfeld, z.B. Strömungs- oder Verdrängungsmaschinen zur Förderung von reaktiven Gasen. Bei der Materialwahl ist neben den tribologischen Eigenschaften zu berücksichtigen, dass das zur Verwendung kommende Material eine möglichst geringe plastische Verformung während des Brechens aufweist. Die erfindungsgemäße Gestaltung der Dichtung gestattet es zudem, den Einfluss der durch die beim Betrieb auftretenden Wärmeeffekte, insbesondere die Materialausdehnung, auf die Dichtungs- und Betriebseigenschaften zu minimieren. Die Dichtung weist überdies kleine schädlichen Räume auf, wodurch ein Einsatz in Geräten möglich wird, in denen schädliche Räume kritisch sind, beispielsweise Vakuumpumpen. In letzterer Anwendung spielt die Druckstoßfestigkeit zunehmend eine Rolle. Auch hier ist die erfindungsgemäße Dichtung von Vorteil, da sie Druckstöße sehr gut verkraften kann. Die Lebensdauer der Dichtung wird erhöht, da die Belastung von einer auf mehrere Flächen verteilt wird. Damit sinkt die durch die axiale Kraft bewirkte Aufeinanderpressung der Flächen, wodurch der Abrieb verringert wird. Die axiale Kraft kann auf verschiedenen Wegen erzeugt werden, z.B. über ein Federelement, eine Druckdifferenz oder einen als Feder wirkenden Elastomerring. Mit einer geeigneten Wahl der Anzahl der Dichtflächen kann eine Optimierung der Lauf und Dichteigenschaften erreicht werden.
In dem zur Montage dieser erfindungsgemäßen Gleitringdichtung notwendigen Verfahren wird der Gleitring zunächst gezielt gebrochen und dann die dadurch entstandenen Teile um die Welle gelegt. Diese Teile werden schließlich durch geeignete Haltemittel aneinandergepresst und die Welle mitsamt dem fixierten Gleitring in das Gehäuse des Geräts montiert. Da das Brechen keinen Materialabtrag an den Bruchflächen erzeugt, können die einzelnen Teile eines Ringes wieder zusammengesetzt werden, ohne dass eine weitere Bearbeitung notwendig ist. Bei den Bruchflächen handelt es sich nicht um glatte sondern um unregelmäßige Flächen, weshalb der aus gebrochenen Teilen zusammengesetzte Gleitring dichter ist als ein aus gesägten Segmenten entstandener Ring. Dieses Verfahren ist sowohl in der Montage als auch in der Demontage der Gleitringe sehr einfach, verursacht keinen Ausschuss, da alle durch das Brechen entstehenden Ringsegmente verwendet werden, und spart dadurch in erheblichem Maße Kosten. Gleichzeitig wird das Ersetzen einer defekten Dichtung deutlich erleichtert, was ebenfalls zu Kosteneinsparungen führt.
Die Kombination des speziellen Gleitrings mit dem Montageverfahren erlaubt die Anordnung der Dichtung an beliebigen Stellen, so werden beispielsweise Hinterschneidungen möglich.

Die erfindungsgemäße Gleitringdichtung soll anhand der Figuren dargestellt werden.
Fig. 1: Gleitringdichtung mit Gleitring von variablem Innendurchmesser.
Fig. 2: Beispielhafter Einsatz einer erfindungsgemäßen Gleitringdichtung an einer Vakuumpumpe, gezeigt ist der Querschnitt des Ringes.
Fig. 3: Ausgestaltungsformen der inneren Kontur des Gleitrings.
Fig. 4: Segmentbauweise der Dichtung.
Fig. 5: Strukturierung der Dichtflächen.
Fig. 6: Darstellung des Verfahrens zur Montage des Gleitringes. a) kompletter Ring, b) zerbrochener Ring, c) Ringteile werden um die Welle gelegt und gesichert. d) zeigt den gesicherten Ring.

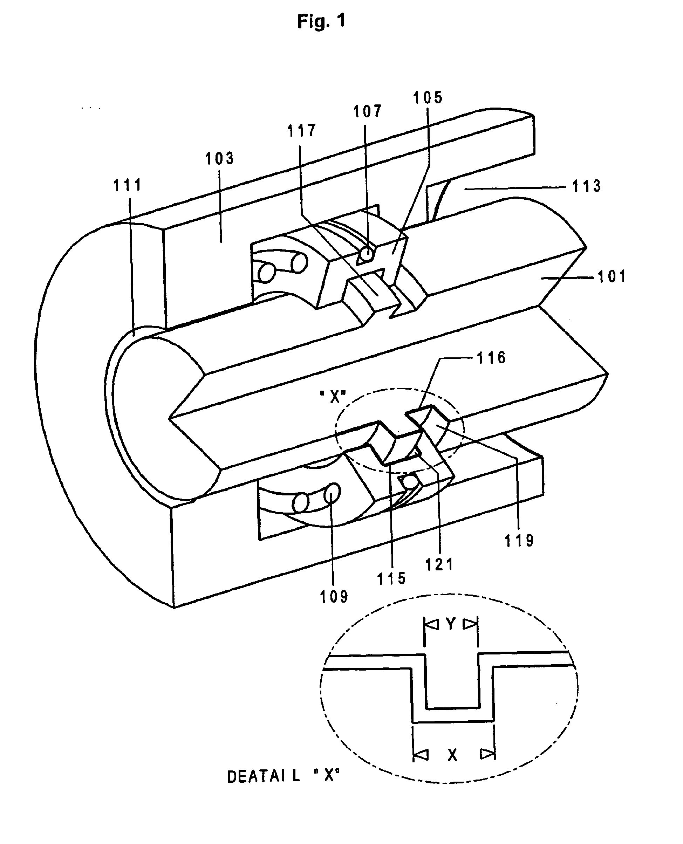

Figur 1 zeigt eine Gleitringdichtung der erfindungsgemäßen Vakuumpumpe. Zwischen einer rotierenden Welle 101 und einem Gehäuse 103 befindet sich der stehende Gleitring 105. Dieser ist über den Elastomerring 107 gehalten. Der Ring dichtet zugleich die Räume 111 und 113 gegeneinander ab. Eine Feder 109 übt eine axiale, in der Figur nach rechts gerichtete Kraft auf den Gleitring aus. Die Innenseite des Gleitrings besitzt einen variablen Innendurchmesser, wodurch eine Kontur 115 gebildet wird. Auf dem rotierenden Bauteil, der Welle, ist eine Gegenkontur 116 geformt. Beide Konturen stehen miteinander im Eingriff. Im Beispiel wird dies erreicht, indem ein Teil 117 der Welle so gestaltet ist, dass er in den Gleitring hineinragt. Dieser Teil ist beispielhaft als Teil der Welle gezeigt, er kann aber auch Bestandteil eines separaten, auf die Welle aufgebrachten Bauteils sein. Die axiale Kraft drückt den Gleitring gegen die radiale Flächen 119, so dass sich dort der Dichtspalt einstellt. Mit radialen Flächen sind solche Flächen bezeichnet, deren Flächennormale parallel zur Wellenachse liegt. Sie sind aus einem nach tribologischen Gesichtspunkten gewählten Material hergestellt, im Beispiel Stahl. Der Gleitring ist aus Kohlenstoff, Keramik oder einem anderen brechbaren Material geformt. Wegen des in den Gleitring hineinragenden Teils 117 kann er nicht auf die Welle aufgeschoben werden. Daher wird er nach dem erfindungsgemäßen Verfahren zunächst durchgebrochen, so dass mehrere Ringstücke entstehen. Diese werden nach dem Brechen um die Welle gelegt. Danach wird der Elastomerring 107 über die beiden Teile geschoben und hält sie zusammen. Je nach Anforderungen können die Bruchstellen zusätzlich mit einem geeigneten Klebstoff gesichert werden, wodurch zudem die Dichtwirkung verbessert wird. Der bei Betrieb der Dichtung an der innerhalb des Dichtringes gelegenen Dichtfläche auftretende Materialabrieb wird in Kammer 121 gesammelt.
Durch die Reibung an den Flächen 119 entsteht Wärme, die zu einer Temperaturerhöhung und damit zu einer Längenausdehnung des Teils 117 der Welle führt. Die thermisch bedingte Längenausdehnungen von Welle und Gleitring sind aufgrund der ungleichen Materialpaarung nicht gleich und führen daher zu einer Verringerung des axialen Spaltes zwischen Teil 117 und der Kontur. Diese Ausdehnung darf nicht zu einer Reduzierung des Dichtspaltes oder gar zu einem Anlaufen des Teils auf beiden Seiten führen. Dem ist konstruktiv Rechnung zu tragen. Hierzu werden die Dicke des Teils 117 y und das Maß der Ausnehmung der Kontur x so bemessen, dass ihre Differenz größer als die Längenausdehnung für die im Betrieb zu erwartende Maximaltemperatur ist.

Der Abstand der Flächen 119 untereinander kann im Fertigungsprozess nur begrenzt genau eingehalten werden. Dies stellt für den erfindungsgemäßen Gleitring kein Problem dar, da in einer kurzen, gegenüber der Lebensdauer kleinen Anlaufzeit eine Selbstoptimierung stattfindet. Zu Beginn des Betriebes bildet sich nur an einer der Flächen ein Dichtspalt aus. An diesem wird in dieser Phase der Abrieb durch die höheren Kräfte verstärkt und damit überflüssiges Material abgetragen. Nach kurzer Zeit passt sich der Gleitring der Form und dem Abstand der Flächen 119 an.

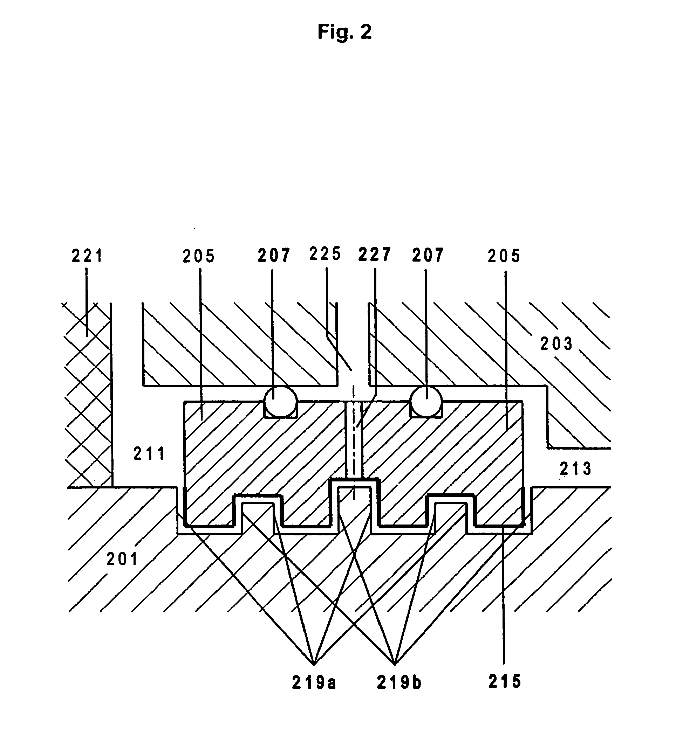

Figur 2 zeigt die erfindungsgemäße Vakuumpumpe mit ihrer Gleitringdichtung, bspw. in einer zweiwelligen Verdrängerpumpe. Die Welle 201 trägt einen Rotationskolben 221 und ist im Gehäuse 203 gelagert. Der Schöpfraum 211 soll vom Getrieberaum 213 abgedichtet werden. Zwischen Welle und Gehäuse sitzt der symmetrisch geformte Gleitring 205, der von den Elastomerringen 207 im Gehäuse gehalten wird. Der Gleitring besitzt einen variablen Innendurchmesser, durch den die Kontur 215 gebildet wird. Eine axiale Kraft kann den Gleitring gegen die Flächen 219a oder 219b drücken, je nach Richtung der Kraft. Diese Kraft entsteht im gegebenen Beispiel durch die Druckdifferenz zwischen Arbeitsraum und Getrieberaum, denn während im Arbeitsraum Vakuum herrscht, ist der Getrieberaum etwa unter Atmosphärendruck. Auch bei einer Umkehrung des Druckverhältnisses arbeitet die gezeigte Dichtung dank ihrer symmetrischen Ausformung. Die Kraft wirkt dann im Bild nach rechts und die Dichtwirkung entsteht an den Flächen 219b. Zudem vereinfacht die Symmetrie die Montage des Ringes, da nicht auf eine bestimmte Orientierung geachtet werden muss.
Die Dichtwirkung wird gegenüber Gleitringdichtungen aus dem Stand der Technik verbessert, da auf kompaktem Raum mehrere Dichtflächen gleichzeitig wirken. Der Druckabfall über die einzelnen Flächen ist daher jeweils kleiner als im Falle nur einer Dichtfläche. Die Ausformung der Kontur sorgt zudem für eine labyrinthartige Abdichtung.
Je nach Anwendungsfall kann eine Beaufschlagung der Dichtung mit Sperrgas wünschenswert sein. Dazu dient eine Bohrung 225 im Gehäuse der Pumpe und eine Bohrung 227 im Gleitring selbst. Alternativ ist es möglich, den Gleitring aus porösem Material zu fertigen, so dass das Sperrgas durch die Poren des Gleitringes selbst dringen kann. Wiederum alternativ ist möglich, zwei erfindungsgemäße Gleitringe axial hintereinander und in axialer Richtung beabstandet von einander anzuordnen und Sperrgas zwischen beide Ringe einzulassen.
In Vakuumpumpen ist es besonders vorteilhaft, als Material elektrographitierte Kunstkohle, zu verwenden. Diese Materialwahl erlaubt die Anpassung an hohe Umgebungstemperaturen. Die maximal verträgliche Umgebungstemperatur hängt dann nur noch von der Wahl des Materials der statischen Dichtung 207 ab.

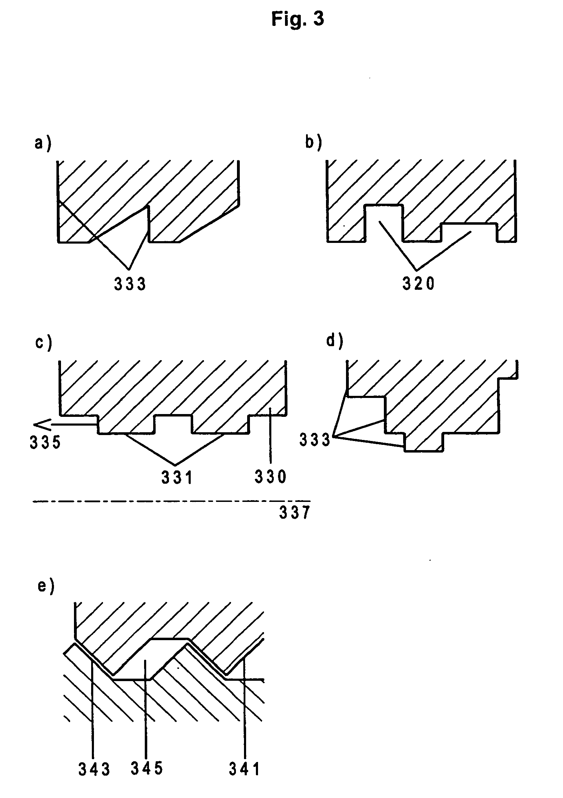

Die Form der Kontur (115, 215) ist nicht auf die gezeigten Beispiele beschränkt. Weitere Varianten sind in Figur 3 dargestellt, beispielsweise ist eine sägezahnartige Kontur denkbar (3a). Weiterhin ist es möglich, die Ausnehmungen 320 unterschiedlich tief oder weit zu gestalten (3b). Denkbar ist auch die Variante 3c, in der nicht Ausnehmungen auftreten, die einer Vergrößerung des Radius entsprechen. Hier wird vielmehr der Radius des Gleitrings 330 an den Stellen 331 verengt.
Vorteilhaft ist es, wenn die Konturen radiale Flächen 333 aufweisen, also solche Flächen, deren Normale 335 parallel zur Wellenachse 337 sind. Eine ebenfalls erfindungsgemäße Wirkung erzielt die Lösung nach Figur 3d, bei der die Kontur stufenartig ausgebildet ist. Hier wirken die einzelnen Stufen als einzelne Dichtflächen. Auch hier kann die Kontur so ausgeführt werden, dass eine Dichtwirkung bei beiden Ausrichtungen der axialen Kraft erzielt werden kann. Auch eine sägezahnartige Kontur 341 nach Figur 3e, die auf eine ebenfalls sägezahnartige Gegenkontur 343 trifft und mit dieser im Eingriff steht, stellt eine Möglichkeit der Umsetzung des Erfindungsgedankens dar. Bei der Wahl der Sägezahnform ist die thermische Ausdehnung der Bauteile zu Beachten und entsprechend Freiraum 345 zu lassen.

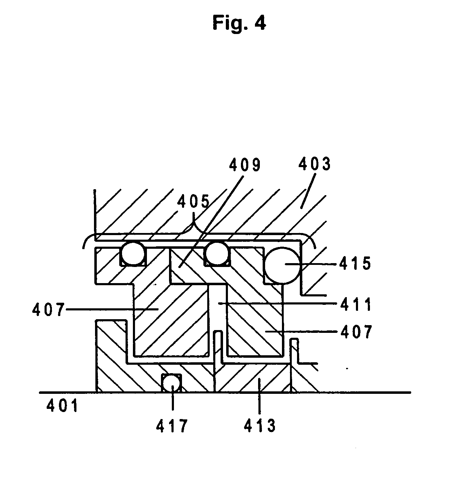

Der Erfindungsgedanke des variablen Innendurchmessers des stehenden Gleitrings lässt sich auch durch die Lösung nach Figur 4 realisieren. Hierbei wird der Ring 405 aus mehreren, vorteilhafter aber nicht notwendiger Weise identischen Segmenten 407 gebildet, die über die axialen Überstände 409 zueinander orientiert werden. In die Kammern 411 greifen Abschnitte der Ringe 413 ein, die auf die Welle 401 geschoben werden. Ein Elastomerring 415 dichtet den Ring 405 gegen das Gehäuse 403 ab. Die Bauteile 413 werden über Dichtringe 417, beispielsweise Elastomerringe, gegen die Welle abgedichtet. Die axiale Kraft kann auch hier statt durch den Elastomerring durch ein Federelement oder eine Druckdifferenz zwischen den abzudichtenden Räumen erzeugt werden. Auch diese Variante erlaubt eine sehr kompakte Bauweise mit möglichst hoher Dichtwirkung.

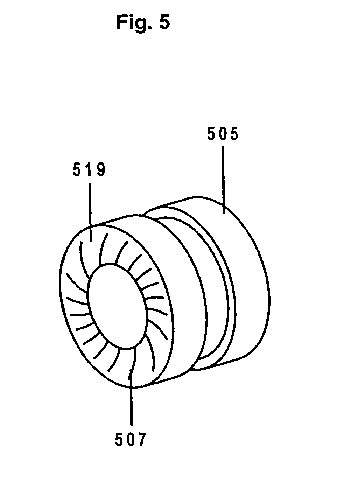

Eine weitere vorteilhafte Ausgestaltung zeigt Figur 5. Es ist bekannt, die zur Drehachse senkrechten Dichtflächen 519 einer Gleitringdichtung 505 mit Rillen 507 zu versehen. Diese bewirken eine Vergrößerung des Dichtspalts und reduzieren damit den Verschleiß. Dies lässt sich auch bei der vorgestellten Dichtung umsetzen. Besonders vorteilhaft ist es, solche Rillen an symmetrischen Ringen auf beiden Seiten der Dichtung einzusetzen, da sie dann eine Selbstzentrierung der Dichtung bewirken. Weiterhin erlauben sie höhere Umfangsgeschwindigkeiten der Welle.

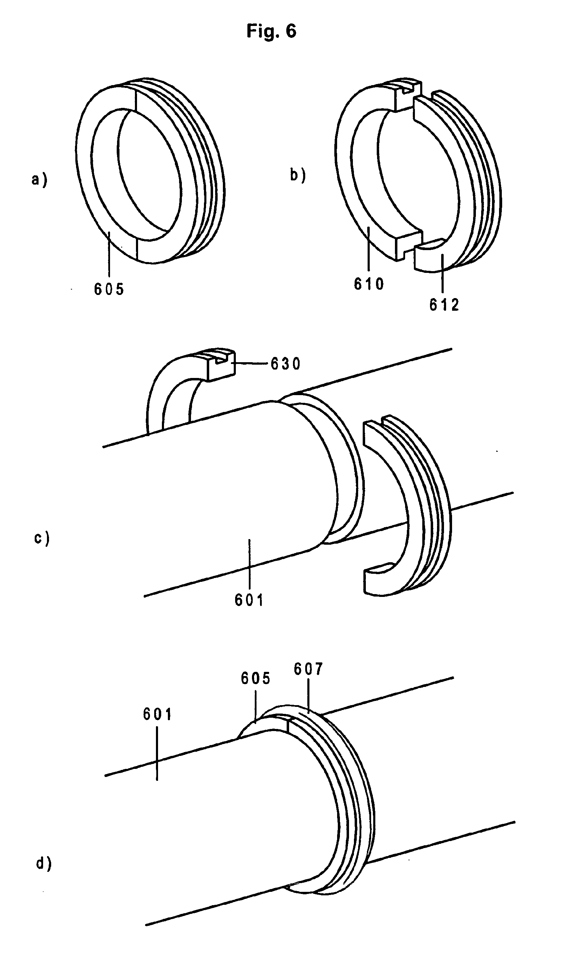

Figur 6 erläutert das zur Montage des erfindungsgemäßen Gleitringes 605 notwendige Verfahren. Figur 6a zeigt den Ring, wie er aus dem Herstellungsprozess kommt. Auf seiner Stirnfläche können Sollbruchstellen vorgesehen sein. Dazu wird die Stirnfläche an den gewünschten Bruchstellen angeritzt oder angesägt. Im nächsten Schritt wird der Ring gezielt gebrochen, es entstehen zwei Ringhälften 610 und 612 nach Figur 6b. Diese werden dann wie in Figur 6c gezeigt um die Welle 601 gelegt und wieder derart zusammen gesetzt, dass die zuvor entstandenen Bruchflächen aufeinander sitzen. Abschließend erfolgt ein Sichern der beiden Hälften gegen Auseinanderfallen, die beispielsweise durch einen aufgeschobenen Elastomerring geschehen kann. Figur 6d zeigt den Ring im beispielhaft durch den Elastomerring 607 gesicherten Zustand. Vorteilhaft ist es, die Bruchflächen 630 zusätzlich durch geeigneten Klebstoff zu sichern und damit auch zusätzlich abzudichten.

## Patentansprüche

1. Vakuumpumpe mit einer axialen Gleitringdichtung zur Abdichtung einer rotierenden Welle (101) mit stehendem Gleitring, wobei der stehende Gleitring (105; 205; 405; 505) als Zylinder mit variablem Innendurchmesser gestaltet ist, wodurch eine Kontur (115) entsteht, die den Querschnitt des Gleitringes beschreibt und die auf eine angepasste Gegenkontur (116) auf der Welle trifft, so dass beide miteinander im Eingriff stehen, und wobei wenigstens ein Teil (117) in den stehenden Gleitring hineinragt, **dadurch gekennzeichnet, dass** der stehende Gleitring mindestens zwei durch Brechen entstandenen Teile (610, 612) aufweist, die durch wenigstens einen Elastomerring (107; 607) gegen Auseinanderfallen gesichert sind.

2. Vakuumpumpe nach Anspruch 1, **dadurch gekennzeichnet, dass** die durch den variablen Innendurchmesser entstehende Kontur (115, 215) mindestens zwei radiale Flächen (119; 219; 333) aufweist.

3. Vakuumpumpe nach Anspruch 1 oder 2, **dadurch gekennzeichnet, dass** die axiale Kraft durch einen Elastomerring (415) erzeugt wird.

4. Vakuumpumpe nach Anspruch 1 oder 2, **dadurch gekennzeichnet, dass** die axiale Kraft durch eine Feder (109) erzeugt wird.

5. Vakuumpumpe nach Anspruch 1 oder 2, **dadurch gekennzeichnet, dass** die axiale Kraft durch eine Druckdifferenz zwischen den gegeneinander abzudichtenden Räumen (211, 213) erzeugt wird.

6. Vakuumpumpe nach einem der vorhergehenden Ansprüche, **dadurch gekennzeichnet, dass** die Ausgestaltung der Kontur (115) eine Wirkung der Dichtung für beide Richtungen der axialen Kraft erlaubt.

7. Vakuumpumpe nach einem der vorhergehenden Ansprüche, **dadurch gekennzeichnet, dass** die Gegenkontur (116) den äußeren Teil des Querschnitt eines separaten Bauteils beschreibt, das an der Welle (101) angebracht ist.

8. Vakuumpumpe nach einem der vorhergehenden Ansprüche, **dadurch gekennzeichnet, dass** im Gehäuse (203) und im stehenden Gleitring (205) Bohrungen (225, 227) zur Beaufschlagung mit Sperrgas vorhanden sind.

9. Vakuumpumpe nach einem der vorhergehenden Ansprüche, **dadurch gekennzeichnet, dass** der stehende Gleitring (205) aus porösem Material hergestellt ist.

## Claims

1. Vacuum pump having an axial sliding ring seal for sealing a rotating shaft (101) with stationary sliding ring, wherein the stationary sliding ring (105; 205; 405; 505) is fashioned as a cylinder of variable inside diameter, thereby producing a contour (115) that describes the cross section of the sliding ring and that encounters an adapted mating contour (116) on the shaft, so that both are in mutual engagement, and wherein at least one part (117) projects into the stationary sliding ring, **characterized in that** the stationary sliding ring comprises at least two parts (610, 612) that are produced by breaking and that are secured against falling apart by means of at least one elastomer ring (107; 607).

2. Vacuum pump according to claim 1, **characterized in that** the contour (115, 215) arising as a result of the variable inside diameter comprises at least two radial faces (119; 219; 333).

3. Vacuum pump according to claim 1 or 2, **characterized in that** the axial force is generated by means of an elastomer ring (415).

4. Vacuum pump according to claim 1 or 2, **characterized in that** the axial force is generated by means of a spring (109).

5. Vacuum pump according to claim 1 or 2, **characterized in that** the axial force is generated by means of a pressure difference between the spaces (211, 213) that are to be sealed off from one another.

6. Vacuum pump according to one of the preceding claims, **characterized in that** the configuration of the contour (115) allows an action of the seal for both directions of the axial force.

7. Vacuum pump according to one of the preceding claims, **characterized in that** the mating contour (116), describes the outer part of the cross section of a separate component that is mounted on the shaft (101).

8. Vacuum pump according to one of the preceding claims, **characterized in that** in the housing (203) and in the stationary sliding ring (205) there are bores (225, 227) for the admission of seal gas.

9. Vacuum pump according to one of the preceding claims, **characterized in that** the stationary sliding ring (205) is manufactured from porous material.

## Revendications

1. Pompe à vide comprenant une garniture mécanique axiale d'étanchéité destinée à assurer l'étanchéité d'un arbre rotatif (101) équipé d'une bague de glissement fixe, ladite bague de glissement fixe (105; 205; 405; 505) étant en forme de cylindre avec un diamètre intérieur variable, d'où il résulte un profil (115) qui décrit la section transversale de la bague de glissement, ledit profil coïncidant avec un contre-profil adéquat (116) sur l'arbre, de sorte que les deux sont engagés l'un dans l'autre, un élément (117) au moins entrant dans la bague de glissement fixe, **caractérisée en ce que** la bague de glissement fixe est constituée d'au moins deux segments (610; 612) créés par rupture et maintenus solidaires par le biais d'au moins un anneau d'élastomère (107; 607).

2. Pompe à vide selon la revendication 1, **caractérisée en ce que** le profil (115, 215) résultant du diamètre intérieur variable comporte au moins deux faces radiales (119; 219; 333).

3. Pompe à vide selon la revendication 1 ou 2, **caractérisée en ce que** la force axiale est générée par un anneau d'élastomère (415).

4. Pompe à vide selon la revendication 1 ou 2, **caractérisée en ce que** la force axiale est générée par un ressort (109).

5. Pompe à vide selon la revendication 1 ou 2, **caractérisée en ce que** la force axiale est générée par un différentiel de pression entre les deux espaces (211; 213) qu'il s'agit d'étancher l'un par rapport à l'autre.

6. Pompe à vide selon l'une quelconque des revendications précédentes, **caractérisée en ce que** le profil (115) est configuré de façon à permettre un effet d'étanchéité dans les deux sens de la force axiale.

7. Pompe à vide selon l'une quelconque des revendications précédentes, **caractérisée en ce que** le contre-profil (116) décrit la partie extérieure de la section transversale d'un élément constitutif séparé agencé sur l'arbre (101).

8. Pompe à vide selon l'une quelconque des revendications précédentes, **caractérisée en ce qu'**il est présent, dans le carter (203) et dans la bague de glissement fixe (205), des alésages (225, 227) pour l'alimentation en gaz d'arrêt.

9. Pompe à vide selon l'une quelconque des revendications précédentes, **caractérisée en ce que** la bague de glissement fixe (205) est fabriquée en un matériau poreux.
